# FASCICULE DE BREVET EUROPEEN

(11) **EP 1 004 898 B1**
(45) Date de publication et mention de la délivrance du brevet: **13.06.2001**
(21) Numéro de dépôt: 99402936.1
(22) Date de dépôt: 25.11.1999
(51) Int. Cl.: G01T 1/164

(54) **Support comportant deux couronnes pour une gamma-caméra**
Träger mit zwei Ringen für eine Gammakamera
Support having two rings for a gamma-camera

(30) Priorité: 27.11.1998 FR 9814999
(43) Date de publication de la demande: 31.05.2000
(73) Titulaire: Sopha Médical Vision International, 75008 Paris (FR)
(72) Inventeur: Treillet, Jean, M., Cabinet Schmit et associés, 95000 Cergy (FR)
(74) Mandataire: Schmit, Christian Norbert Marie

(56) Documents cités:
- EP-A- 0 517 600
- WO-A-96/30781
- US-A- 4 928 283

## Description

La présente invention a pour objet une gamma-caméra avec deux couronnes de type tunnel et à usage universel. Le but de l'invention est de rendre plus rationnelle la conception d'une telle gamma-caméra afin qu'elle puisse servir à des usages multiples.

On connaît dans le domaine de la médecine nucléaire les gamma-caméras du type PET ou du type SPECT (Positon Emission Tomography, tomographie par émission en coïncidence, Single Photon Emission Computed Tomography, tomographie construite à partir d'émissions de photons individuels). Dans le premier cas il s'agit de détecter l'apparition de phénomènes d'émission nucléaire en coïncidence sur deux détecteurs opposés et en vis-à-vis. Dans l'autre cas, il s'agit de détecter des émissions nucléaires émises dans au moins une direction. L'invention s'applique aussi bien à l'une qu'à l'autre de ces deux techniques.

Le principe de ces phénomènes est le suivant. On injecte dans un corps à examiner, celui d'un patient, un marqueur radiologique, par exemple le plus généralement du Technétium, quelques fois du Thallium, ou d'autres marqueurs. En fonction d'une charge métabolique, ces marqueurs vont se fixer de manière préférentielle dans certains organes du corps du patient. Par la densité de cette fixation, ils révèlent alors l'état fonctionnel de l'organe dans lequel ils se fixent. Ces marqueurs émettent au cours de leur métabolisation des rayons gamma. Ces rayons gamma sont détectés par un détecteur.

Un tel détecteur comporte sur une face d'entrée un collimateur dont le rôle est d'assurer l'acquisition d'une image en projection. Il est toutefois connu de disposer des collimateurs à trous inclinés ou à trous focalisés. Les rayons gamma qui traversent le collimateur aboutissent ensuite dans un scintillateur dont le rôle est de transformer chaque rayon gamma en une scintillation lumineuse. Cette scintillation lumineuse est détectable par un ensemble de tubes photomultiplicateurs disposés en aval du scintillateur. Les tubes photomultiplicateurs détectent les scintillations et délivrent en correspondance des signaux électriques dont l'amplitude et la forme sont révélatrices de la nature et du lieu de l'événement nucléaire détecté. On traite ces signaux, notamment dans des matrices de barycentration, pour constituer une image révélatrice de cette activité nucléaire.

Plusieurs types d'examens sont effectués. On distingue notamment d'une part les tomographies et d'autre part les images corps entier. Dans une tomographie on acquiert une image en projection pour une incidence donnée du détecteur par rapport au corps du patient. Puis on acquiert une autre image en projection pour une autre incidence, décalée de quelques degrés par rapport à la première. Ainsi de suite, on acquiert une multitude d'images en projection dont on extrait par des algorithmes de reconstruction d'image (du même type que ceux utilisés en tomodensitométrie) une image en trois dimensions de l'organe étudié. Les images en projection sont acquises lentement. Typiquement la durée d'acquisition d'une image en projection oscille entre cinq secondes pour les plus rapides, jusqu'à deux minutes pour les images les plus fines. Dans la demande de brevet européen EP-A-0 517 600, il a été expliqué que pour accélérer l'acquisition d'images en tomographie il était préférable d'utiliser deux détecteurs, et par ailleurs de placer ces détecteurs à 90 ° l'un de l'autre autour du corps du patient.

Un autre examen concerne les images dites corps entier. Pour acquérir une telle image, on déplace le détecteur en translation le long du corps du patient alors qu'il est allongé sur le dos. On prélève essentiellement avec ce type d'examen un image d'angiographie des jambes du patient, notamment pour reconnaître des problèmes d'insuffisance de vascularisation. De préférence également dans ce cas, pour augmenter la qualité de l'image, on utilise un deuxième détecteur placé sous le corps du patient. Le patient passe alors en translation entre ces deux détecteurs. Avec certaines machines, le patient est immobile, la machine se déplace par rapport à lui.

D'autres examens sont pratiqués telles les cardiographies d'effort. Pour ces autres examens, un patient se soumet à un effort physique en même temps que des images sont prises.

Les différents types d'examens pratiqués rendent nécessaire une grande mobilité des détecteurs les uns par rapport aux autres. Les machines conçues pour les mener à bien sont des machines de deux types : des machines tunnels ou des machines à statif ouvert dites à bras. Dans une machine tunnel le patient passe dans un tunnel dont les parois supportent mécaniquement les détecteurs. Dans les machines à bras, un statif maintient deux bras supportant chacun un détecteur et entre lesquels le patient est présenté. On connaît par exemple par la demande de brevet WO 96/30781 une machine mixte tunnel et à bras. Le problème présenté par ces différentes machines est celui de leur complexité de fabrication. En effet la technologie de détection, notamment celle des collimateurs, impose des détecteurs lourds. En pratique le poids de ces détecteurs peut être de l'ordre de 300 ou 400 kilos. Compte tenu des variétés de mise en place de ces détecteurs autour du corps du patient, et de la précision requise de l'ordre du millimètre à chaque fois, les bâtis qui supportent ces machines sont massifs. Ils le sont d'ailleurs d'autant plus que dans les hôpitaux ou dans les cabinets médicaux où ils sont installés souvent le sol sur lequel ils reposent n'est pas parfait. Dans ce cas ces bâtis doivent être capables de s'affranchir de ces problèmes de sol.

En outre, les mobilités des détecteurs au cours de ces examens sont mécaniquement très diverses. On distingue en général sept axes, ou sept motorisations différentes, au minimum pour pouvoir accéder à toutes les positions requises. Par ailleurs l'amplitude de certains déplacements et la précision requise imposent que des pièces mécaniques qui servent à relier entre eux différents organes de ces machines soient elles-mêmes très robustes. Cette robustesse est automatiquement significative de lourdeur et de limite de mouvement.

Dans la demande de brevet européen cité ci-dessus on a notamment indiqué que des déplacements latéraux et verticaux de la machine relativement au corps du patient, au cours d'un examen de tomographie, devaient rencontrer des valeurs très grandes. Un des problèmes les plus importants consiste justement à produire ces déplacements relatifs du lit par rapport à la machine, ou inversement, en cours d'examen. Un déplacement horizontal du lit ou du statif est en outre contrecarré par la consistance des sols sur lesquels reposent les machines. Si le sol n'est pas parfaitement plan, ou solide, les déplacements sont anarchiques. La qualité des images acquises est alors mauvaise.

Une solution à ces problèmes consisterait à fabriquer des machines encore plus grosses dans lesquelles le lit ferait partie intégrante de la machine. Les solutions de ce type sont trop encombrantes et coûteuses. De ce point de vue, les machines à bras peuvent présenter quelques avantages par rapport aux machines tunnels. Elles présentent cependant l'inconvénient de devoir déplacer le lit d'examen selon deux directions perpendiculaires, selon qu'il s'agit de faire un examen de type corps entier ou un examen tomographique.

Dans l'invention on a voulu fabriquer une machine de type tunnel dans laquelle il n'y aurait pas à déplacer latéralement et verticalement le lit par rapport au statif durant l'examen, ce qui apparaît comme une contrainte rédhibitoire à l'utilisation. Dans l'invention on a alors été confronté au problème de devoir procurer les déplacements en translation au moyen de pièces intermédiaires, de grande dimension, donc lourdes. Pour éviter les problèmes de poids qui en résultent, on a alors découvert que, si des déplacements en translation, selon deux directions perpendiculaires X et Y, nécessitaient des débattements importants, donc de grandes pièces rectangulaires en X et Y, les déplacements le long de ces pièces s'effectuaient en fait selon des diagonales. Dans l'invention on a alors choisi de réaliser des déplacements orientés selon ces diagonales, quitte à devoir combiner de tels déplacements lors de la réalisation d'examens particuliers. On montrera alors que cette organisation permet d'obtenir, dans le cadre des tomographies, les explorations les plus amples tout en limitant la dimension des pièces ainsi que le nombre des motorisations mises en oeuvre. On montrera notamment que la course des déplacements utiles est réduite dans un rapport 1/√2. Sur le plan pratique avec ces pièces de dimensions plus courtes, mais octroyant des débattements plus grands, on montrera qu'on arrive à se passer des déplacements latéraux et verticaux du lit par rapport au statif. Dans ce cas on résout d'une manière parfaite les problèmes d'installation des machines dans les salles d'examen.

L'invention a donc pour objet une gamma-caméra munie d'un statif avec deux couronnes mobiles supportant chacune un détecteur au moyen d'un support, caractérisé en ce que chaque support comporte de part et d'autre un système rail-patin de coulissement, un premier système rail-patin coopérant avec une couronne et l'autre système rail-patin coopérant avec un détecteur, les deux systèmes rail-patins procurant au détecteur des coulissements dans des directions perpendiculaires l'une de l'autre, une bissectrice de ces directions étant colinéaire à un rayon d'une couronne.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : une représentation schématique en coupe d'une gamma-caméra munie de systèmes de coulissement avec des directions inclinées par rapport à un rayon de la machine ;
- Figure 2 : une représentation mixte, en coupe et en vue, d'une partie de la machine montrée sur la figure **1** selon une direction AA de cette dernière ;
- Figure 3 une vue générale de face d'une gamma-caméra selon l'invention ;
- Figures 4a à 4d un dispositif de blocage de deux couronnes l'une sur l'autre afin de diminuer un nombre de dispositifs d'entraînement ;
- Figures 5a à 5c : la représentation selon une variante préférée de systèmes rail-patins montés sur trois couples de platines à déplacement relatif ;
- Figure 6 Une utilisation de la gamma-caméra de l'invention dans le cas où une inclinaison de deux détecteurs ne serait plus avec un angle d'ouverture de 90 ° mais un angle plus aigu ;
- Figure 7 : la réalisation d'un lit d'examen, particulièrement bien adaptée à la machine de l'invention puisqu'il n'a plus à supporter de déplacements latéraux.

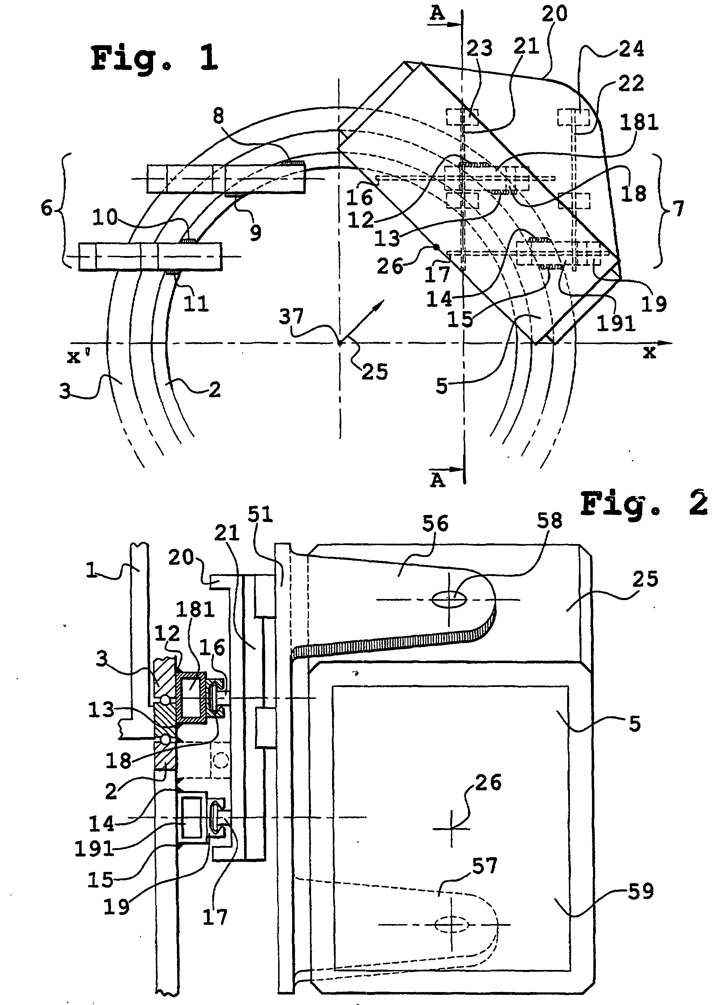

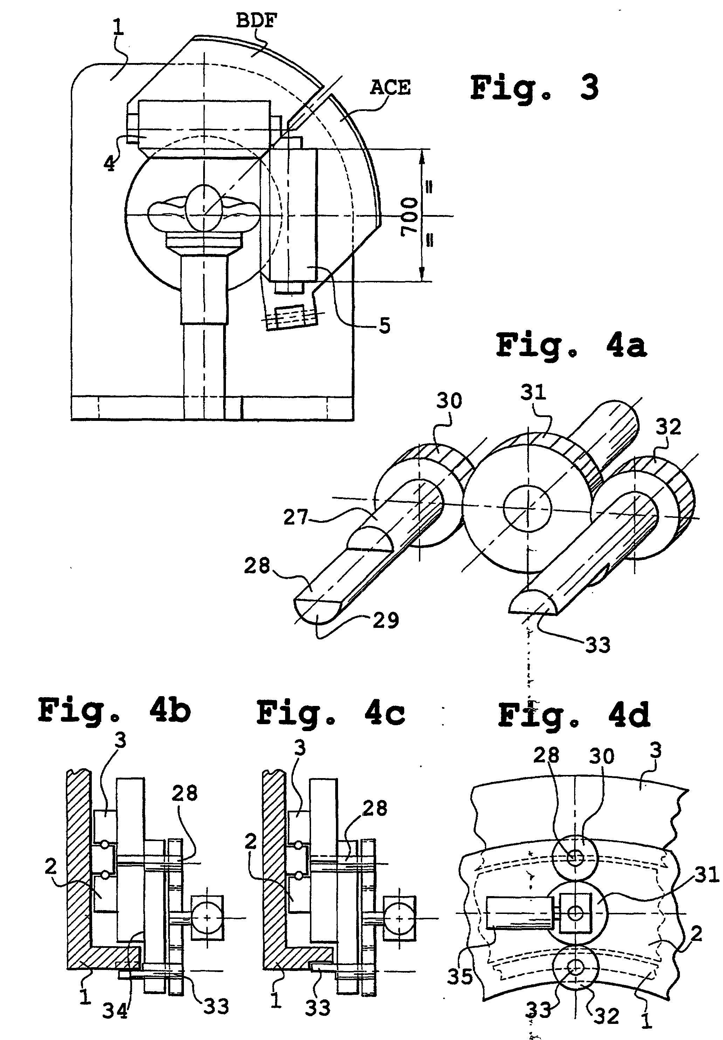

La figure 1 montre une gamma-caméra selon l'invention. La figure 1 est une vue en coupe, de face. La figure 2 est une vue et une coupe de côté. La figure 3 est une vue de face. Dans l'invention, un statif 1 comporte deux couronnes 2 et 3. Dans un exemple préféré les deux couronnes sont coaxiales et concentriques. La couronne 2, intérieure, est inscrite dans la couronne 3. Chaque couronne porte un détecteur respectivement 4 et 5 au moyen d'un support 6 et 7. Par exemple les figures 1 et 2 montrent que le support 6 est fixé à la couronne 2 par des soudures 8 à 11. Le support 7 est lui fixé à la couronne 3 par des soudures 12 à 15. Dans un exemple ces supports comportent des éléments de tube orientés comme des déplacements prévus en translation des détecteurs.

La figure 1 montre les systèmes rail-patins de coulissement. Par exemple pour le support 7, un premier système comporte un premier couple de rails 16 et 17, horizontaux, sur lesquels coulissent des patins respectivement 18 et 19. Par système rail-patin on entend un organe mobile, un rail, par rapport à l'autre, un patin, des patins, voire une glissière. Le rail peut être fixé à une pièce, par exemple une plaque intermédiaire 20, alors que le ou les patins ou la glissière sont fixés à une autre, par exemple ici la couronne 3. Sur le plan pratique, les patins 18 et 19 sont fixés à la couronne 3 par l'intermédiaire d'éléments de tubes 181 et 191 soudés par les soudures 12 à 15. Mais l'inverse est possible, du moment qu'une pièce puisse coulisser en translation par rapport à une autre.

Les rails et les patins assurent deux fonctions. Une première fonction est un coulissement. Une deuxième fonction est un maintien dans toutes les directions qui ne comportent pas la direction de coulissement. Dans la position montrée sur la figure 1, la plaque 20 peut ainsi se déplacer horizontalement. La plaque 20 possède deux faces. Une première face porte les rails 16 et 17. De l'autre côté de la plaque est installé un autre système rail-patin comportant notamment deux rails 21 et 22. Les deux rails 21 et 22 sont réalisées sur l'autre face de la plaque 20. Les rails 21 et 22 sont prévus pour coulisser dans des patins 23 et 24 solidaires du détecteur. Les deux rails 21 et 22, ici orientés verticalement, sont perpendiculaires aux rails 16 et 17.

Selon une particularité importante de l'invention, les directions de coulissement d'un détecteur 5 résultant de la présence de ces rails possèdent toujours une bissectrice 25 colinéaire à un rayon de la couronne 3. Le rayon 25 dont il est question pour matérialiser cette bissectrice est celui qui passe par le centre 37 des couronnes 2 et 3, servant de centre de rotation à l'ensemble de la machine, et par le milieu 26 du détecteur 5.

Par opposition, dans l'état de la technique une des directions de déplacement était toujours radiale alors que l'autre était tangentielle. Dans l'invention les deux directions de coulissement rail-patins présentent des inclinaisons, sensiblement à 45 °, par rapport à cette direction radiale et à cette direction tangentielle. On notera sur la figure 1, alors que le détecteur est incliné à 45 ° par rapport à l'horizontale ou la verticale, que les systèmes rail-patins qui l'emmènent sont verticaux et horizontaux.

Sur la figure 3, les deux détecteurs 4 et 5 sont inclinés à 90 ° l'un par rapport à l'autre. La disposition des détecteurs dans la machine correspond dans ce cas à l'acquisition d'une image de tomographie. Dans ce cas, les deux détecteurs 4 et 5 se touchent par une de leurs arêtes. Comme cela est indiqué ci-dessus, cette disposition est la plus profitable et la plus rapide pour acquérir une image reconstruite. Pour contourner au plus près le corps du patient représenté par une ellipse, il faut déplacer ensemble, en cours de rotation, les deux détecteurs par rapport au centre du tunnel. Ces déplacements sont rendus possibles par une gestion coordonnée des coulissements, dans les deux directions perpendiculaires, pour chacun des détecteurs qui restent jointifs.

Lorsque, par contre, les détecteurs sont face à face pour saisir le corps entier, en PET ou en SPECT, il faut pouvoir les écarter ou les rapprocher à la demande de la corpulence du patient. Ces déplacements symétriques se font suivant les bissectrices des deux directions de coulissement précitées. Des coulissements qui tendent à approcher ou éloigner les détecteurs l'un de l'autre sont ceux qui demandent le plus d'amplitude. C'est la raison pour laquelle les systèmes rail-patins ont été orientés préférentiellement selon ces directions. Compte tenu de l'inclinaison à 45 ° il est facile de comprendre que chacun des déplacements dans les directions de coulissements perpendiculaires est √2 fois plus faible qu'un coulissement qui se ferait suivant la bissectrice de ces deux directions. Cette réduction amène alors à la réduction attendue des pièces intermédiaires, et notamment de la plaque 20 comme cela sera montré en détail plus loin.

De manière à pouvoir passer d'une image de type tomographique à une image corps entier, les couronnes 2 et 3 doivent pouvoir se déplacer l'une par rapport à l'autre. Ensuite elles doivent être à nouveau maintenues l'une par rapport à l'autre. Pour aboutir à ce résultat on peut limiter le nombre de moteurs à mettre en service. La figure 4a rappelle une conception de clavettes tournantes largement utilisée pour embrayer deux pièces en mouvement relatif. Une partie cylindrique 27 d'une clavette 28 peut tourner dans un palier non représenté. Ce palier appartient à une des pièces à entraîner, notamment ici à entraîner en rotation. La clavette 27 comporte une partie évidée 29 en demi-lune. Cette demi-lune peut se loger, ou non, dans un évidement de même forme appartenant à l'autre pièce à entraîner. L'embrayage ou le débrayage s'obtient par la rotation de 180 ° de la clavette 27.

Pour commander la rotation de la clavette 27 plusieurs solutions sont envisageables. Dans l'une d'elles, un jeu de pignons 30 et 31 relié à un moteur non représenté permet d'effectuer le mouvement. En outre le pignon 31 peut engrener un autre pignon 32 qui commande une autre clavette 33. Les figures 4b à 4d montrent l'utilisation de ce dispositif pour l'entraînement de deux couronnes 2 et 3. Eventuellement plusieurs couples de clavettes telles que celles de la figure 4a peuvent être montés pour lier les deux couronnes ensemble.

Dans ce cas un disque extérieur 34 solidaire de la couronne 2 porte le dispositif à clavettes. Dans la position montrée sur la figure 4b, la clavette 28 permet d'entraîner ensemble les deux couronnes 2 et 3. La clavette 33 permet dans ce cas de laisser tourner ensemble les deux couronnes 2 et 3 par rapport à une couronne fixe du statif 1 qui les supporte. Sur la figure 4c, la clavette 33 permet de lier le statif 1 à la couronne 2 seule. Dans le cas de cette figure la clavette 28 relâche le mouvement circulaire de la couronne 3. Il possible plutôt que de tourner les clavettes de 180 °, en les tournant de seulement 90 °, de bloquer ensemble les deux couronnes par rapport au statif. Une telle position peut être utilisée notamment pour réaliser des images de type corps entier. La figure 4d montre un moteur 35 commandant l'engrenage 31 qui lui-même commande les deux engrenages 30 et 32.

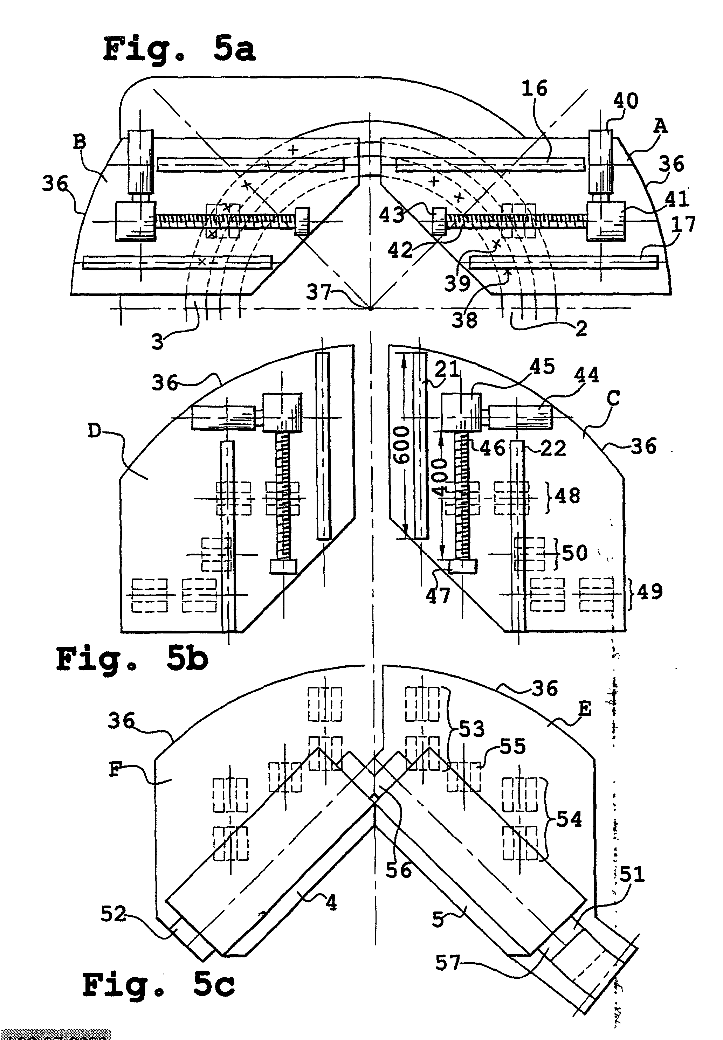

Les systèmes avec rails et patins montrés sur la figure 1 sont de préférence réalisés en utilisant trois couples de platines, identiques deux à deux. Ces couples AB, CD, et EF de platines montrés respectivement sur les figures 5a à 5c présentent tous la particularité de posséder un contour externe 36, arrondi avec un rayon de courbure correspondant à un même rayon à partir du centre 37 de la machine. Dans ces couples de platines symétriques, les systèmes rail-patins des deux détecteurs sont symétriques l'un de l'autre par rapport à un plan diamétral d'un tunnel de la gamma-caméra. Dans un exemple ce rayon de courbure est de l'ordre de 1m. Les platines A et B, figure 5a, sont destinées à être vissées par des vis multiples telles que 38 et 39 sur les couronnes 2 et 3 respectivement. La platine A porte, à l'opposé de ce qui est décrit sur la figure 1, les rails 16 et 17 évoqués précédemment. La platine B porte des rails correspondants. La platine A porte encore un moteur 40 et un réducteur 41 qui entraînent une extrémité d'une vis sans fin 42. La vis 42 est tenue à son autre extrémité dans un palier 43 lui aussi fixé à la platine A. La vis 42 est parallèle aux rails 16 et 17.

Sur la figure 5b, la platine C comporte, d'un côté visible, les rails 21 et 22 ainsi qu'un ensemble moto-réducteur 44-45 qui entraîne une vis sans fin 46 maintenue à son autre extrémité par un palier 47. Le palier 47 est également fixé sur la même face de la platine C. La vis 46 est parallèle aux rails 21 et 22. Sur une autre face invisible de la platine C, montrés en pointillés, sont représentés des couples de patins 48 et 49 destinés à s'agripper sur les têtes des rails 16 et 17. La platine C porte encore en position intermédiaire entre les patins 48 et 49 un écrou 50. L'écrou 50 est fixé à la platine C. Il est engagé dans la vis sans fin 42. Lorsque le moto-réducteur 40-41 entraîne la vis 42, l'écrou 50 soudés sur la face non visible de la platine C impose à celle-ci de coulisser par l'intermédiaire des patins 48 et 49 le long des rails 16 et 17.

Un troisième couple de platines E et F comporte sur une face visible des étriers 51 et 52 pour supporter les détecteurs 5 et 4 respectivement. Sur une autre face, invisible, les platines E et F portent des ensembles de patins 53 et 54 pour coulisser le long des rails 21 et 22. L'envers des platines E et F porte également un écrou 55 engagé dans la vis sans fin 46 pour être emmené par le moto-réducteur 44-45. Avec le moto-réducteur 44-45 on obtient ainsi une élévation verticale (par rapport à ce qui est montré sur la figure) du détecteur 5, alors qu'avec le moto-réducteur 40-41 on obtient une translation latérale.

Le système avec les trois couples de platines, encore plus que celui montré sur la figure 1, autorise les inversions de montage des rails et des patins sur l'une ou l'autre des platines. Ainsi il serait possible de monter les patins de l'envers de la platine C sur la platine A, et les rails de la platine A sur l'envers de la platine C. Ceci est la raison pour laquelle on utilise cette appellation de système rail-patin.

La figure 5b montre les dimensions préférées des débattements le long des différentes translations proposées. Ainsi le rail 21 aura une longueur de 600 mm, le débattement utile proposé par la vis sans fin 46 étant de l'ordre de 400 mm. Il en est de même du rail 16 et de la vis sans fin 42 respectivement.

La figure 2 montre l'étrier 51 avec deux jambes 56 et 57. Le détecteur 5 est vu incliné à 45 °, alors que la partie gauche de la figure 2 est une vue en coupe. Cet étrier 51 porte aux extrémités des deux jambes des paliers tels que 58 qui maintiennent le détecteur 5. Ce faisant ce détecteur 5 peut s'orienter de façon à ce qu'une face active 59 de ce détecteur 5 ne soit plus orientée vers l'axe 37 de la machine, mais soit orienté frontalement, sur les figures 1 et 3, face à l'observateur. Dans ce cas il est possible, confer figure 1, en tournant la couronne 3 du détecteur 5 de 45 ° dans le sens des aiguilles d'une montre autour de l'axe 37, et en manoeuvrant le détecteur 5 dans les paliers 58 d'orienter la face 59 de telle façon qu'un patient debout ou assis face à la machine puisse être examiné. Le détecteur 5 n'est de préférence pas carré mais rectangulaire, il possède une grande dimension et une petite dimension. De préférence l'axe de rotation passant par le palier 58 est parallèle à la grande dimension du détecteur 5. Dans cette utilisation le détecteur sera vertical. On note par ailleurs que l'axe de rotation qui passe par les paliers des étriers est toujours incliné par rapport aux translations 16, 17,21 et 22.

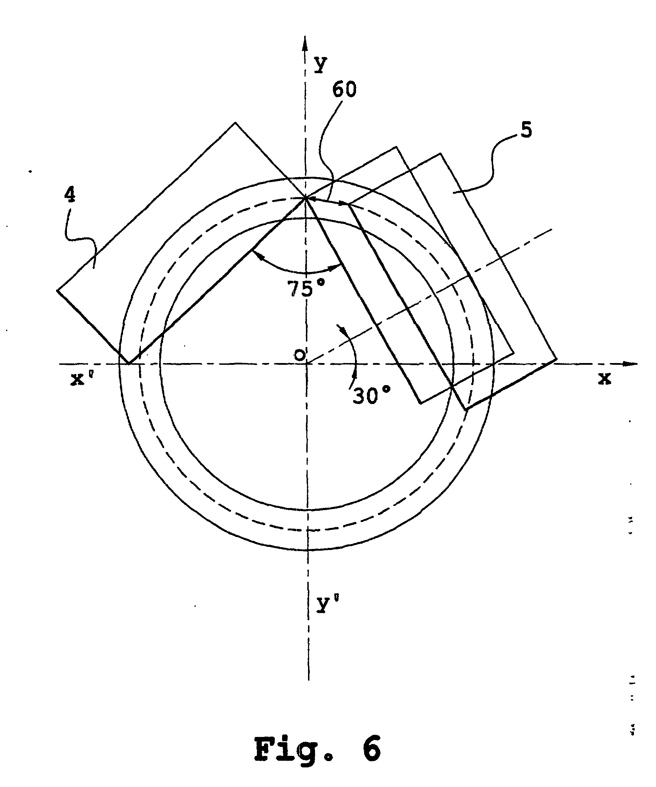

La figure 6 montre une utilisation où les deux détecteurs 4 et 5 sont inclinés l'un par rapport à l'autre de 75 °. Ceci est obtenu en orientant les couronnes 2 et 3 l'une par rapport à l'autre, de manière à ce que leurs index initiaux fassent un écart de 75 °. Une fois cette position atteinte, il suffit, par exemple avec les platines A, C, E du détecteur 5 de le déplacer le long des rails 16 et 17 et 21 et 22 pour qu'il se rapproche du détecteur 4. On constate que même dans cette position les déplacements 60 sont sensiblement colinéaires aux directions des rails 16 et 17. Ces directions 60 de déplacement exploitent au mieux les orientations des rails 16 et 17. Pour obtenir un déplacement 60 avec des coulissements de type radial et tangentiel, les déplacements auraient été approximativement √2 plus grands.

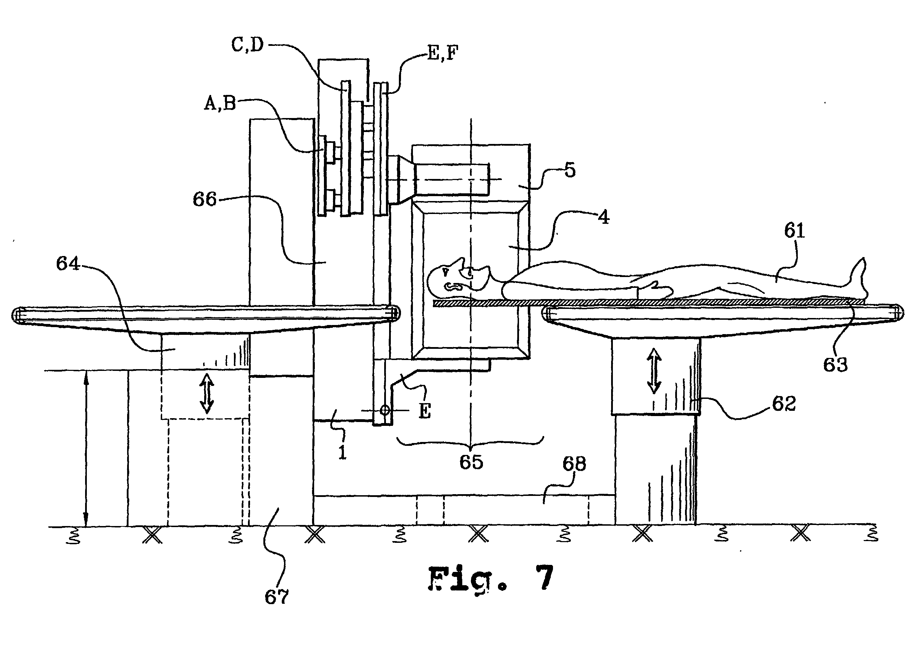

La figure 7 montre un exemple particulièrement intéressant d'utilisation d'une gamma-caméra selon l'invention. Dans celle-ci, il est question au moyen des détecteurs 4 et 5 d'effectuer une tomographie du corps 61 d'un patient. Dans ce but un plateau transbordeur 63 qui porte le corps 61 peut passer d'un quai 62 à un autre 64. L'avantage d'utiliser une telle solution se situe dans un dégagement libre 65 existant sous le patient, et permettant notamment d'y faire passer les détecteurs 4 et 5 au cours de l'examen. On notera que ce dégagement 65 est obtenu sans avoir à renforcer outre mesure le plateau transbordeur 63, ni avoir à subir des effets contrariants de sa flexion au cas où le porte à faux de ce plateau 62 serait important.

En effet dans l'invention le plateau sera presque toujours porté par les deux quais 62 et 64. Les fléchissements qu'il subit sont alors négligeables et leurs conséquences dans les images ne sont pas perceptibles.

Par contre une telle solution impose une mécanique de synchronisation précise des deux quais 62 et 64. Notamment un quai d'amenée 62 aura une possibilité d'élévation importante. Par exemple il pourra s'élever de 600 mm à 1100 mm par rapport au sol. La position basse permet une mise en place plus facile de certains patients à mobilité réduite. De l'autre côté de la machine, le quai 64 ne nécessitera pas un débattement en hauteur aussi important. Un débattement de 850 à 1100 mm pourra être suffisant pour tenir compte de l'espace utile dans le tunnel 66 de la machine. La seule synchronisation qu'il y a lieu de mettre en place dans l'élévation des quais 62 et 63 est celle par laquelle, lorsque le quai 62 est entré dans la phase de réglage de 850 à 1100 mm, le quai 64 recopie sa position en altitude.

La désolidarisation des quais 62 et 64 rend toutefois les déplacements latéraux inutilisables. Ceci n'est pas un problème dans l'invention puisque avec la solution retenue il n'y a plus besoin de déplacer latéralement le statif 1 par rapport au lit du patient, constitué par les quais 62 et 64 et par le plateau transbordeur 63.

La figure 7 rappelle également en coupe les montages des platines A, B, C, D, E et F dans le statif 1. Celui-ci est par ailleurs solidaire d'un bâti 67 qui repose sur le sol par l'intermédiaire de deux longerons 68 longitudinaux au lit 62-64.

## Revendications

1. Gamma-caméra munie d'un statif (1) avec deux couronnes (2, 3) mobiles supportant chacune un détecteur (4, 5) au moyen d'un support (20), caractérisé en ce que chaque support comporte de part et d'autre un système rail-patin de coulissement, un premier système (16-19) rail-patin coopérant avec la couronne et l'autre système (21, 24) rail-patin coopérant avec un détecteur, les deux systèmes rail-patins procurant au détecteur des coulissements dans des directions perpendiculaires l'une de l'autre, une bissectrice (25) de ces directions étant colinéaire à un rayon d'une couronne.

2. Gamma-caméra selon la revendication 1, caractérisée en ce que les deux couronnes sont coaxiales, de préférence concentriques.

3. Gamma-caméra selon l'une des revendications 1 à 2, caractérisée en ce que le statif (1) est fixe.

4. Gamma-caméra selon l'une des revendications 1 à 3, caractérisée en ce que le statif comporte une couronne fixe supportant les deux couronnes mobiles.

5. Gamma-caméra selon l'une des revendications 1 à 4, caractérisée en ce qu'un système rail-patin fixé à une couronne comporte un étrier (52) avec deux jambes (56, 57), un palier (58) de maintien du détecteur étant monté en rotation au bout de ces deux jambes, ce palier ayant un axe orienté de préférence comme une grande dimension d'un détecteur.

6. Gamma-caméra selon l'une des revendications 1 à 5, caractérisée en ce que les systèmes rail-patins des deux détecteurs sont symétriques l'un de l'autre par rapport à un plan diamétral d'un tunnel de la gamma-caméra.

7. Gamma-caméra selon l'une des revendications 1 à 6, caractérisée en ce qu'elle comporte un lit avec deux quais (62, 64) et un plateau (63) transbordeur d'un quai à l'autre.

8. Gamma-caméra selon la revendication 7, caractérisée en ce que les quais sont à hauteur variable, les ajustements en hauteur des quais étant synchronisés sur un plage haute de variation de ces hauteurs.

## Patentansprüche

1. Gammastrahlen-Kamera mit einem Stativ (1) mit zwei beweglichen Ringen (2, 3), die je einen Detektor (4, 5) mittels eines Trägers (20) halten, dadurch gekennzeichnet, daß jeder Träger zu beiden Seiten ein Schiene-Schlitten-System zur Gleitbewegung aufweist, wobei ein erstes Schiene-Schlitten-System (16-19) mit dem Ring und das andere Schienen-Schlitten-System (21,24) mit einem Detektor zusammenwirkt, wobei die beiden Schiene-Schlitten-Systeme dem Detektor Gleitbewegungen in zueinander senkrechten Richtungen ermöglichen, wobei eine Winkelhalbierende (25) dieser Richtungen zum Radius eines Rings kollinear ist.

2. Gammastrahlen-Kamera nach Anspruch 1, dadurch gekennzeichnet, daß die beiden Ringe koaxial, vorzugsweise konzentrisch sind.

3. Gammastrahlen-Kamera nach einem der Ansprüche 1 bis 2, dadurch gekennzeichnet, daß das Stativ (1) ortsfest ist.

4. Gammastrahlen-Kamera nach einem der Ansprüche 1 bis 3, dadurch gekennzeichnet, daß das Stativ einen ortsfesten Ring aufweist, der die beiden beweglichen Ringe trägt.

5. Gammastrahlen-Kamera nach einem der Ansprüche 1 bis 4, dadurch gekennzeichnet, daß ein an einem Ring befestigtes Schiene-Schlitten-System einen Bügel (52) mit zwei Schenkeln (56, 57) aufweist, wobei ein Lager (58) für den Halt des Detektors drehbar am Ende dieser beiden Schenkel angeordnet ist, wobei die Achse dieses Lagers vorzugsweise gemäß einer großen Abmessung eines Detektors ausgerichtet ist.

6. Gammastrahlen-Kamera nach einem der Ansprüche I bis 5, dadurch gekennzeichnet, daß die Schiene-Schlitten-Systeme der beiden Detektoren zueinander in bezug auf eine diametrale Ebene eines Tunnels der Gammastrahlen-Kamera symmetrisch sind.

7. Gammastrahlen-Kamera nach einem der Ansprüche 1 bis 6, dadurch gekennzeichnet, daß sie ein Bett mit zwei Rampen (62, 64) und einer Wandertisch-Platte (63) von einer Rampe zur anderen aufweist.

8. Gammastrahlen-Kamera nach Anspruch 7, dadurch gekennzeichnet, daß die Rampen variable Höhen aufweisen, wobei die Höheneinstellungen der Rampen in einem hohen Bereich der Variation dieser Höhen synchronisiert sind.

## Claims

1. Gamma camera provided with a stand (1) with two moving rings (2, 3) each supporting a detector (4, 5) by means of a support (20), characterised in that on either side each support comprises a sliding foot and rail system, a first foot and rail system (16-19) co-operating with the ring and the other foot and rail system (21, 24) co-operating with a detector, the two foot and rail systems allowing the detector to describe sliding movements in directions perpendicular to one another, a bisector (25) of these directions being co-linear with a radius of a ring.

2. Gamma camera according to claim 1, characterised in that the two rings are coaxial, preferably concentric.

3. Gamma camera according to one of claims 1 to 2, characterised in that the stand (1) is fixed.

4. Gamma camera according to one of claims 1 to 3, characterised in that the stand comprises a fixed ring supporting the two moving rings.

5. Gamma camera according to one of claims 1 to 4, characterised in that a foot and rail system fixed to a ring comprises a stirrup mounting (52) with two limbs (56, 57), a bearing (58) for supporting the detector being mounted rotatably at the end of these two limbs, this bearing having an axis oriented preferably as a major dimension of a detector.

6. Gamma camera according to one of claims 1 to 5, characterised in that the foot and rail systems of the two detectors are symmetrical to one another in relation to a diametric plane of a tunnel of the gamma camera.

7. Gamma camera according to one of claims 1 to 6, characterised in that it comprises a bed with two piers (62, 64) and a table (63) for transfer from one pier to the other.

8. Gamma camera according to claim 7, characterised in that the piers are variable in height, the height adjustments of the piers being synchronised over a wide range of variation of these heights.
